# EUROPEAN PATENT APPLICATION

(11) **EP 1 669 161 A1**
(43) Date of publication of application: **14.06.2006**
(21) Application number: 04787790.7
(22) Date of filing: 09.09.2004
(51) Int. Cl.: B23Q 3/00

(54) **POSITIONING DEVICE AND CLAMPING SYSTEM HAVING THE SAME**

(30) Priority: 01.10.2003 JP 2003342810
(71) Applicant: Kosmek Ltd., Kobe-shi, Hyogo 651-2241 (JP)
(72) Inventor: YONEZAWA, Keitaro, KOSMEK LTD., Kobe-shi, Hyogo 6512241 (JP); HARUNA, Yosuke, KOSMEK LTD., Kobe-shi, Hyogo 6512241 (JP)
(74) Representative: Horton, Andrew Robert Grant
(86) International application number: PCT/JP2004/013126
(87) International publication number: WO 2005/032760

(57) **Abstract**

A plug member (12) is projected upward from a first block (1) so as to be inserted into a positioning hole (5) of a second block (2). An inclined outer surface (13) getting closer to an axis upward is provided on the plug member (12). A sleeve member (15) which is allowed to deform in both a diametrically expanding direction and a diametrically contracting direction is arranged outside the inclined outer surface (13). The sleeve member (15) is provided with a straight outer surface (16) which is allowed to come into close contact with the positioning hole (5) and an inclined inner surface (17) facing the inclined outer surface (13). A drive member (21) is inserted into the plug member (12) axially movably and connected to the sleeve member (15). The sleeve member (15) is moved vertically by a drive device (D). At least one of the inclined inner surface (17) and the inclined outer surface (13) is provided on a pair of projections (61, 61) opposed to each other in the diametrically expanding direction and diametrically contracting direction, and escape portions (62, 62) are formed between the projections (61, 61).

## Description

### Technical Field

The present invention relates to an apparatus for positioning a second block such as a work pallet with respect to a first block such as a table of a machine tool. The invention also relates to a clamping system provided with the positioning apparatus.

### Background of the Invention

Such a positioning apparatus is in general conventionally constructed so as to fit a plug projected from a support surface of a reference member (a first block) into a circular positioning hole opened in a supported surface of a movable member (a second block) (for example, refer to the following Patent Document 1).
Patent Document 1: Japanese Unexamined Patent Publication No. 57-27640

### Summary of the Invention

### Problem to be Solved by the Invention

In the above-described prior art, it is necessary to provide a predetermined fitting gap between the positioning hole and the plug in order to attain a smooth fitting of them. Thereby, the gap will result in a decreased positioning accuracy.

The present invention has been made in view of the above problem, an objective of which is to provide an apparatus capable of conducting positioning with high accuracy.

### Means for Solving the Problem and Effect

The problem to be solved by the present invention is as described above. Next, an explanation will be made for the means for solving the problem and the effect.

### (First Invention)

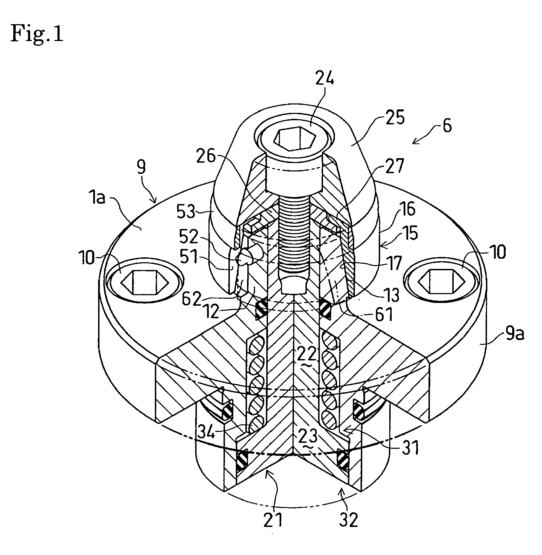

The positioning apparatus of the present invention is constructed as follows, as illustrated in Fig. 1 through Fig. 3 or Fig. 8 through Fig. 11 respectively.
A plug member 12 is projected from a first block 1 so as to be inserted into a positioning hole 5 formed in a second block 2. An inclined outer surface 13 is provided on the plug member 12 so as to get closer to an axis toward the leading end. An annular sleeve member 15 is arranged outside the inclined outer surface 13 and formed in such a way that at least a part in a circumferential direction is allowed to deform in both a diametrically expanding direction and a diametrically contracting direction. The sleeve member 15 is provided with a straight outer surface 16 which is allowed to come into close contact with an inner peripheral surface of the positioning hole 5 and an inclined inner surface 17 which faces the inclined outer surface 13. A drive member 21 is inserted into the plug member 12 axially movably and connected to the sleeve member 15. At least one of the inclined inner surface 17 and the inclined outer surface 13 is provided on a pair of projections 61, 61 opposed to each other in the diametrically expanding and diametrically contracting direction. Between these projections 61, 61 are formed escape portions 62, 62. And, the sleeve member 15 is allowed to axially reciprocate by a drive means D via the drive member 21.

The above-described construction can eliminate a fitting gap after fitting the sleeve member 15 into the positioning hole 5. It is, therefore, possible to smoothly fit the sleeve member 15 into the positioning hole 5 and at the same time attain positioning with high accuracy. Further, when the drive means D is moved for locking, the drive member 21 can press the second block 2 via the sleeve member 15 against the first block 1, therefore, a exclusive clamping means can be omitted, whenever necessary. In addition, in a projecting direction of the projections 61, 61, positioning can be made with high accuracy, and in a radial direction perpendicular to the projecting direction of the projections 61, 61, the escape portions 62, 62 allow positional misalignment of the positioning hole 5 with the plug member 12. Furthermore, since the projections 61, 61 are not directly in contact with the positioning hole 5, they will not damage the inner peripheral surface of the positioning hole 5 or cause an impression, therefore, the projections are not a cause of a decreased positioning accuracy.

### (Second invention)

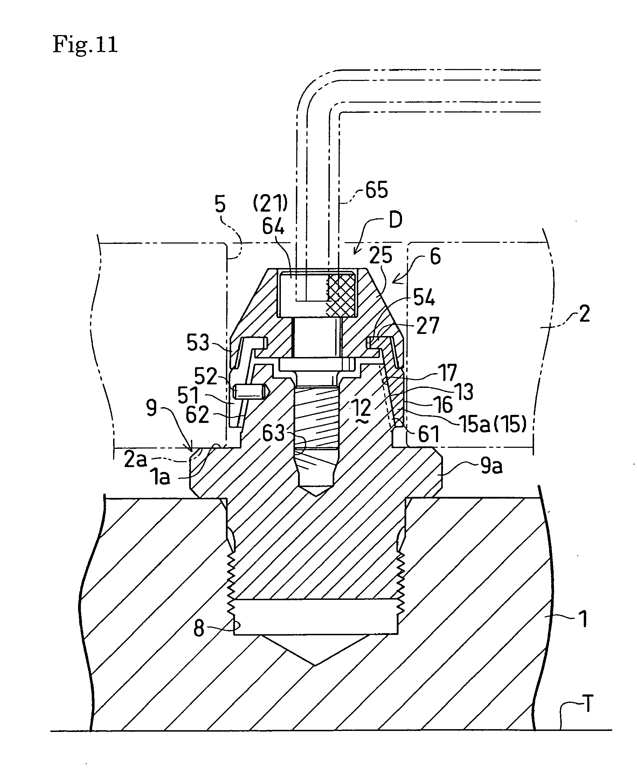

In the first invention, it is preferable to provide the following construction, for example, as shown in Fig. 1 through Fig. 3 or in Fig. 11.
In a peripheral wall 15a of the sleeve member 15 is formed a slit 51 extending axially. A cover member 53 which covers at least a part of the slit 51 is arranged outside the sleeve member 15.

With this structure, it is possible to provide such a simple construction that the sleeve member 15 can be deformed in a diametrically expanding direction and a diametrically contracting direction. Further, the cover member 53 can prevent intrusion of foreign matter such as swarf and dust through the slit 51, thus eliminating a cause of defects due to intrusion of foreign matter into portions between the inclined outer surface 13 and the inclined inner surface 17.

### (Third invention)

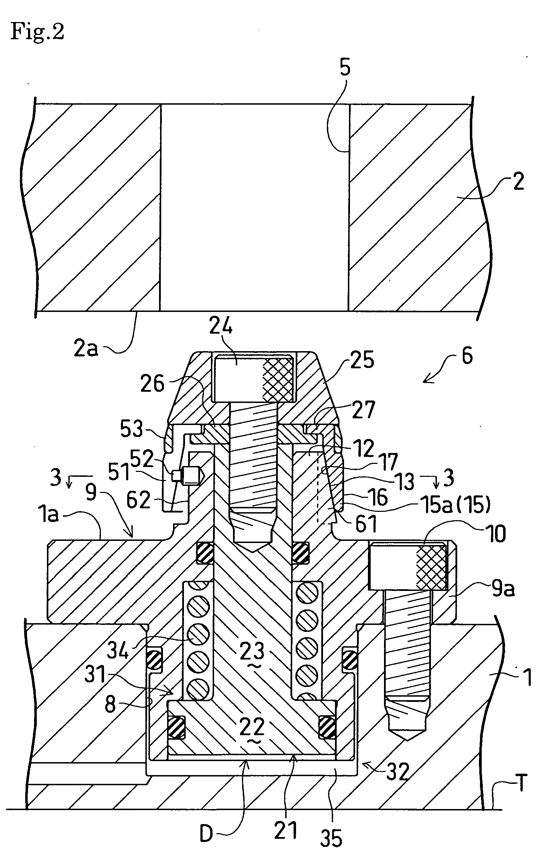

In the second invention, it is preferable that the cover member 53 is formed annularly in a circumferentially seamless manner, for example, as shown in Fig. 1 and Fig. 2.

With this structure, it is possible to prevent more reliably intrusion of foreign matter such as swarf and dust through the slit 51..

### (Fourth invention)

In the second invention, it is preferable that the cover member 53 is integrally formed with a cap member 25 arranged from the plug member 12 to a leading end side, for example, as shown in Fig. 11.

With this structure, it is possible to reduce the number of components and also decrease the manufacturing processes and the cost.

### (Fifth invention)

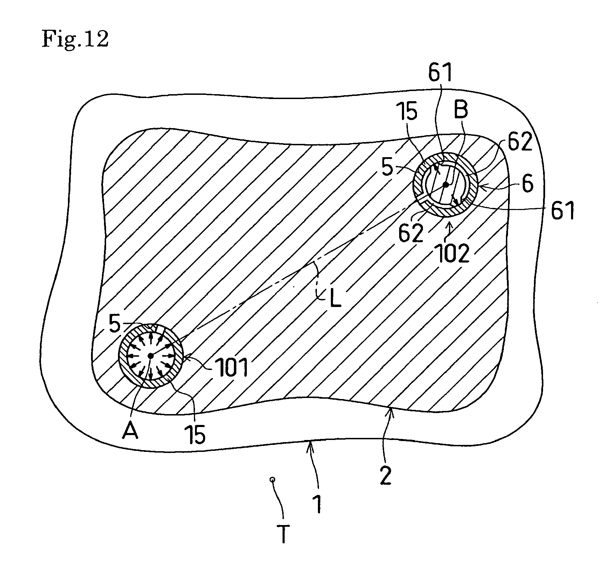

Further, the clamping system of the present invention is constructed to have any one of the positioning apparatuses given in the first invention through the fourth invention, for example, as illustrated in Fig. 12.

With this structure, it is possible to provide better workability on attachment or detachment of the first block and the second block and also conduct positioning with high accuracy. It is also possible to omit an exclusive clamping means, whenever necessary.

### (Sixth invention)

Further, the clamping system of the present invention is provided with a plurality of positioning apparatuses, at least one of which is formed by any one of the positioning apparatuses given in the first invention through the fourth invention, for example, as illustrated in Fig. 12.

With this structure, it is possible to provide better workability on attachment or detachment of the first block and the second block and also conduct positioning with high accuracy. It is also possible to omit an exclusive clamping means, whenever necessary. In addition, it is possible to provide a clamping system capable of conducting positioning in various modes.

### Brief Description of the Drawings

Fig. 1 is a perspective view illustrating a plug means of the positioning apparatus of a first embodiment in the present invention and the cross section of the plug means;
Fig. 2 is an elevational sectional view illustrating the above positioning apparatus, corresponding to a view indicated by the arrow 2-2 in Fig. 3;
Fig. 3 is a view indicated by the arrow 3-3 in Fig. 2;
Fig. 4 is an elevational sectional view illustrating a state that the plug means is inserted into the positioning hole of the above positioning apparatus;
Fig. 5 is a sectional view indicated by the arrow 5-5 in Fig. 4;
Fig. 6 is an elevational sectional view illustrating a state that the sleeve member expands diametrically to come into close contact with an inner peripheral surface of the positioning hole in the above positioning apparatus;
Fig. 7 is a view indicated by the arrow 7-7 in Fig. 6;
Fig. 8 is a view similar to Fig. 3, illustrating a second embodiment;
Fig. 9 is a view similar to Fig. 3, illustrating a third embodiment;
Fig. 10 is a view similar to Fig. 8, illustrating a fourth embodiment; and
Fig. 11 is an elevational sectional view similar to Fig. 4, illustrating the positioning apparatus of the fifth embodiment.
Fig. 12 is a schematic view illustrating a plan cross section of the clamping system to which the above positioning apparatus is applied.

### Description of Reference Numerals

- 1:: base plate (first block)
- 2:: work pallet (second block)
- 5:: positioning hole
- 12:: plug member
- 13:: inclined outer surface
- 15:: sleeve member
- 17:: inclined inner surface
- 21:: drive member
- 61:: projections
- 62:: escape portions
- D:: drive means

### Best Mode for Carrying Out the Invention

### (First embodiment)

Fig. 1 through Fig. 7 illustrate a first embodiment of the present invention.
First, an explanation will be made for a whole structure of the positioning apparatus of the present invention by referring to Fig. 1 through Fig. 3.

In the present embodiment, as illustrated in Fig. 2, on a table T of a machine tool is placed a base plate 1, which is a major part of a first block. A supported surface 2a of a work pallet 2 as a second block is received by a support surface 1a of the base plate 1 and the work pallet 2 is positioned with respect to the base plate 1. In the supported surface 2a of the work pallet 2 are opened a plurality of circular positioning holes 5. A plug means 6 is provided on the base plate 1, corresponding to each of the positioning holes 5. In this case, a single set of the positioning hole 5 and the plug means 6 is illustrated, among plural sets.

An explanation will be made as follows for a construction of the plug means 6 by referring to Fig. 2.
In the base plate 1 is formed an installation hole 8, a housing 9 is precisely fitted into the installation hole 8 and a flange 9a of the housing 9 is fixed to the base plate 1 by a plurality of tightening bolts 10. A plug member 12 is projected upward (toward a leading end) from the housing 9. The plug member 12 is allowed to be inserted into the positioning hole 5. Further, an axis of the plug member 12 is substantially coincides with an axis of the installation hole 8.

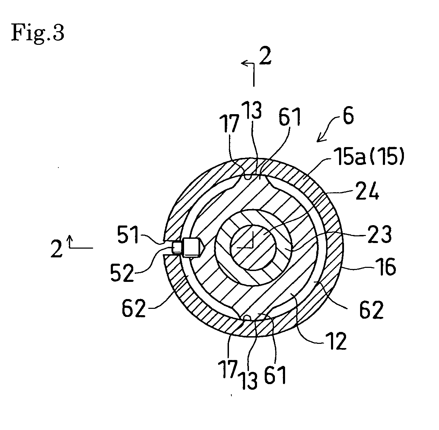

As illustrated in Fig. 3, a pair of projections 61, 61 are projected from an outer periphery of the plug member 12 outwardly in a radial direction. The pair of the projections 61, 61 are arranged so as to be opposed to each other in a radial direction. Between the projections 61, 61 are formed escape portions 62, 62 extending circumferentially. On each outer surface of the projection 61 is provided an inclined outer surface 13 so as to get closer to the axis upward (toward the leading end). In the present embodiment, the above-described inclined outer surface 13 is formed in an arc shape in a plan view.

On an outer periphery of the plug member 12 is arranged an annular sleeve member 15. The sleeve member 15 is formed in a collet shape. More specifically, in a peripheral wall 15a of the sleeve member 15 is formed one slit 51 which extends axially to open on both upper and lower ends. Thereby, a substantially whole part of the peripheral wall 15a which extends circumferentially is allowed to deform elastically in a radial direction. When the sleeve member 15 is released in the diametrically expanding force direction, the sleeve member 15 is restorable by its own elastic restoring force toward the diametrically contracting direction.

Over an entire inner periphery of the sleeve member 15 is formed an inclined inner surface 17. The inclined inner surface 17 is constructed in a tapered shape so as to get closer to the axis upward (toward the leading end). The inclined inner surface 17 is directly in contact with the tapered inclined outer surfaces 13, 13 of the plug member 12. Meanwhile, over an entire outer periphery of the sleeve member 15 is formed a straight outer surface 16 inserted into the positioning hole 5.

Regarding the slit 51, any slit will do, as long as it extends axially, and there is a case where the slit 51 extends straight along the axis or a case where it is inclined with respect to the axis. Further, the slit 51 is not limited to a single slit but may be available in a plurality. For example, a plurality of slits 51 are opened on both the upper and lower surfaces of the sleeve member 15 alternately and circumferentially.

A rotation stopper pin 52 is projected in a radial direction from the plug member 12 and an outer end is inserted into the slit 51. As a result, rotation of the sleeve member 15 is blocked. Further, in this case, an elastic seal member (not illustrated) such as rubber is accommodated in the slit 51 by adhesion, packing or the like. However, the elastic seal member may be omitted, depending on an application of the positioning apparatus.

Into a cylindrical hole of the plug member 12 is inserted a drive member 21 vertically movably. The drive member 21 is provided with a piston 22 inserted hermetically into a lower part of the housing 9, a piston rod 23 projected upward from the piston 22, a bolt 24 screwed into an upper part of the piston rod 23, a cap member 25 fixed by the bolt 24, and a ring 26 held between the cap member 25 and an upper end surface of the piston rod 23. Between the cap member 25 and the ring 26 is fitted an upper flange 27 of the sleeve member 15 horizontally movably.

Inside the housing 9 are provided both a locking means 31 and a releasing means 32 which construct the drive means D. The locking means 31 is constructed with a compression coil spring-like lock spring 34 arranged above the piston 22 and with the piston 22. Further, the releasing means 32 is constructed with a hydraulic chamber 35 for releasing provided below the piston 22 and with the piston 22.

On an upper part (leading end portion) of the outer peripheral surface of the sleeve member 15 is formed an annular shallow recess, and an annular cover member 53 is fitted into the recess. The cover member 53 is constructed with a member different from the cap member 25 in the present embodiment. Further, the cover member 53 is formed in a circumferentially seamless manner, covering an outside of an upper portion of the slit 51. An upper end surface of the cover member 53 is in contact with a lower end surface of the cap member 25.

An explanation will be made for operation of the positioning apparatus by referring to Fig. 2 and Fig. 3, and Fig. 4 through Fig. 7.

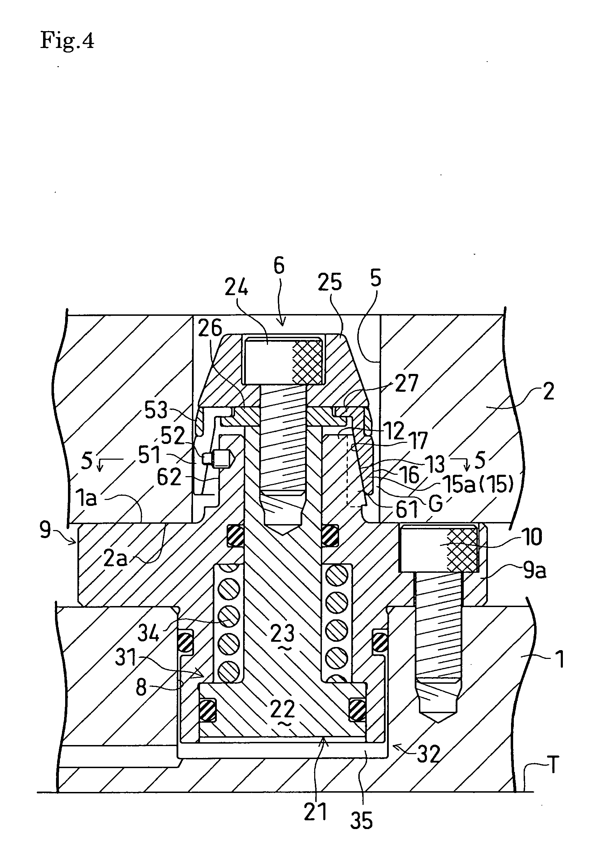

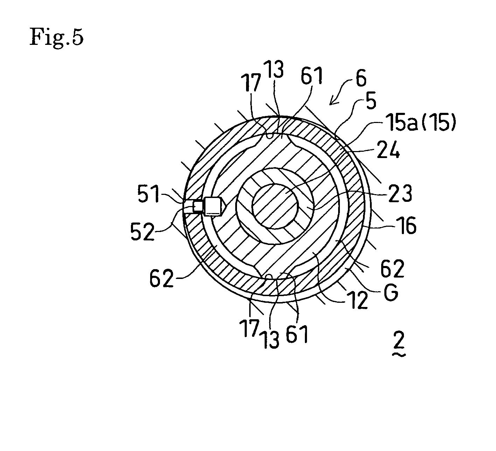

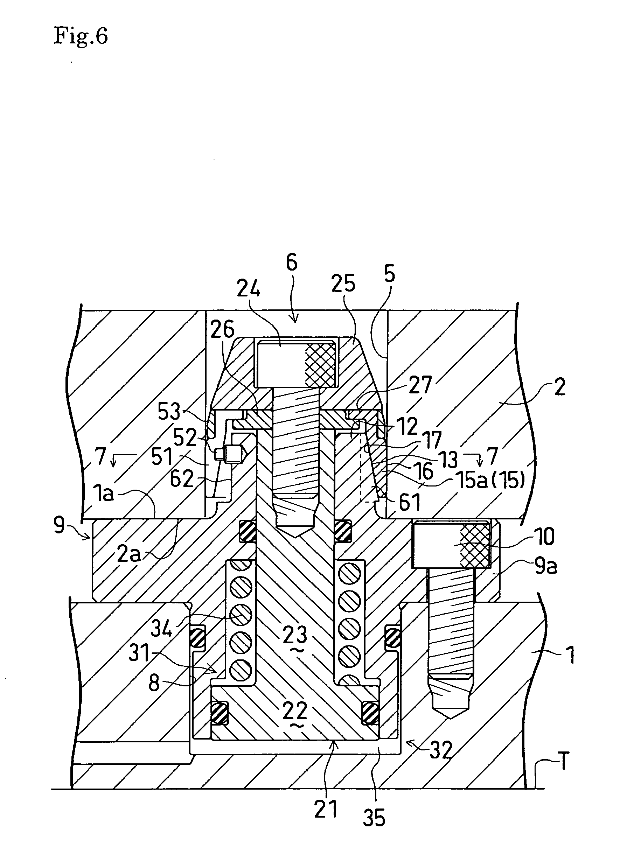

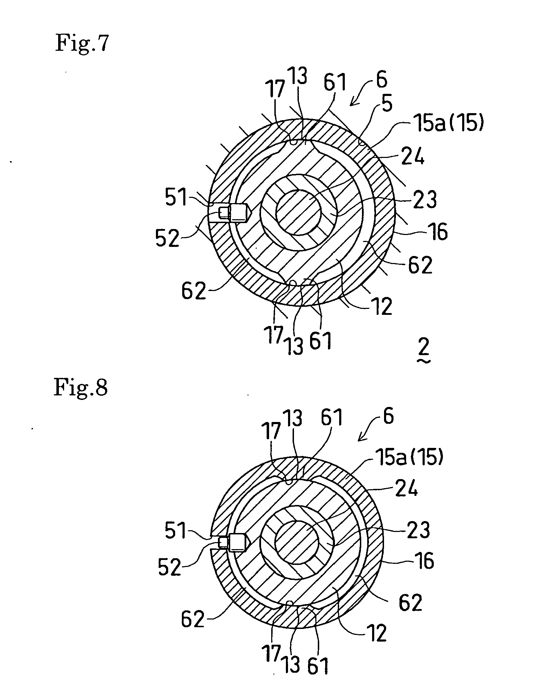

Fig. 4 is an elevational sectional view illustrating a state that the plug means 6 is inserted into the positioning hole 5 in the positioning apparatus. Fig. 5 is a view indicated by the arrow 5-5 in Fig. 4. Fig. 6 is an elevational sectional view illustrating a state that the sleeve member 15 diametrically expands to come into close contact with an inner peripheral surface of the positioning hole 5 of the positioning apparatus. Fig. 7 is a view indicated by the arrow 7-7 in Fig. 6.

In a released condition illustrated in Fig. 2 and Fig. 3, pressurized oil is supplied to the hydraulic chamber 35, by which the piston 22 allows the piston rod 23 to ascend against an urging force of the lock spring 34, the piston rod 23 allows the sleeve member 15 to ascend via the bolt 24 and the ring 26, and the sleeve member 15 is switched into a contracted state. In this case, between an upper end surface of the plug member 12 and a lower surface of the ring 26 is formed a large contacting gap. Further, between an outer peripheral surface of the upper portion of the sleeve member 15 in the contracted condition and an inner peripheral surface of the cover member 53 is formed an annular gap (not illustrated).

When the work pallet 2 is positioned in relation to the base plate 1, first, as illustrated in Fig. 4, in the above-described released condition, the work pallet 2 is lowered (or the base plate 1 is raised) and the straight outer surface 16 of the sleeve member 15 is inserted into the positioning hole 5. Since the sleeve member 15 is in the contracted condition as described above, between the inner peripheral surface of the positioning hole 5 and the straight outer surface 16 is formed an annular fitting gap G. It is noted that an explanation will be made hereinafter that, upon such insertion, the axis of the positioning hole 5 is to be misaligned with that of the plug member 12, as illustrated in Fig. 5. The fitting gap G is an eccentric gap as illustrated in Fig. 5, due to the above axial misalignment.

Next, the pressurized oil is discharged from the hydraulic chamber 35. Then, as illustrated in Fig. 6, the piston 22 strongly lowers the sleeve member 15 via the bolt 24 and the ring 26 by an urging force of the lock spring 34, and the inclined inner surface 17 of the sleeve member 15 is wedge-engaged with the inclined outer surface 13 of the plug member 12. Thereby, as illustrated in Fig. 6 and Fig. 7, the sleeve member 15 diametrically expands elastically to come into close contact with the positioning hole 5, and the fitting gap G illustrated in Fig. 4 and Fig. 5 is eliminated.

The sleeve member 15 allows the diametrical expanding force to act on the inner peripheral surface of the positioning hole 5 only at portions facing the projections 61, 61. Therefore, of axial misalignment of the positioning hole 5 with the plug member 12 (the positional misalignment illustrated in Fig. 5), the positional misalignment of the projections 61, 61 in a projecting direction can be corrected by the close contact. Further, the sleeve member 15 can move to some extent in a radial direction perpendicular to the projecting direction of the projections 61, 61 by the existence of the escape portions 62, 62. Therefore, of axial misalignment of the positioning hole 5 with the plug member 12, radial misalignment perpendicular to the projecting direction of the projections 61, 61 is allowed. In other words, the plug means 6 conducts an accurate positioning in the projecting direction of the projections 61, 61 and allows positional misalignment in a radial direction perpendicular thereto.

At the same time with the above positioning, the bolt 24 lowers the work pallet 2 via the sleeve member 15. Thereafter, a clamping means (not illustrated) acts to strongly press the work pallet 2 against the base plate 1.

It is noted that, during the lock driving, the lower surface of the ring 26 comes into contact with the upper end surface of the plug member 12, thereby preventing the sleeve member 15 from being lowered to an extent greater than a predetermined extent.

When the state of the positioning apparatus is changed from the locked condition in Fig. 6 to the released condition, first, the clamping means (not illustrated) is released for the clamped condition and then, as described previously, pressurized oil may be supplied to the hydraulic chamber 35. Thereby, as illustrated in Fig. 4, the sleeve member 15 is raised by the bolt 24 and the ring 26, and the sleeve member 15 diametrically contracts due to its own elastic restoring force, thereby releasing the locked condition. Thereafter, the work pallet 2 is raised.

As explained above, in the present embodiment, while the sleeve member 15 is kept inserted into the positioning hole 5, the fitting gap (gap G illustrated in Fig. 4 and Fig. 5) can be eliminated. Therefore, it is possible to smoothly fit the sleeve member 15 into the positioning hole 5 and at the same time conduct positioning with high accuracy. Further, during the lock movement, the drive member 21 can press the work pallet 2 against the base plate 1 via the sleeve member 15. Therefore, for example, where a lowering force of the sleeve member 15 during the lock driving is set at a sufficiently large value, an exclusive clamping means may be omitted.

Further, in the projecting direction of the projections 61, 61, positioning can be conducted with high accuracy, and in the radial direction perpendicular to the projecting direction of the projections 61, 61, positional misalignment of the positioning hole 5 with the plug member 12 is allowed. In addition, since the projections 61, 61 are not directly in contact with the positioning hole 5, they will not damage the inner peripheral surface of the positioning hole 5 or cause an impression thereon. Therefore, these projections are not a cause of a decreased positioning accuracy.

Further, it is possible to provide such a mechanically simple construction that the sleeve member 15 can be deformed in a diametrically expanding direction and a diametrically contracting direction by forming the slit 51 on the peripheral wall 15a of the sleeve member 15. In addition, since a cover member 53 covering at least a part of the slit 51 is arranged outside the sleeve member 15, it is possible to prevent intrusion of foreign matter such as swarf and dust through the slit 51. Therefore, it is also possible to eliminate a cause of defects due to intrusion of foreign matter into portions between the inclined outer surface 13 and the inclined inner surface 17.

In particular, since the cover member 53 is formed annularly in a circumferentially seamless manner, intrusion of foreign matter can be prevented more reliably. This construction is particularly effective when the slit 51 is provided not singularly but in a plurality.

The explanation has been made above for the first embodiment, which can be changed as illustrated in the following items (1) through (4).

(1) The inclined outer surface 13 may be provided on an outer periphery of another member arranged on the outer periphery of the plug member 12, instead of being provided on the outer periphery of the plug member 12. More specifically, a pair of the projections 61, 61 may be provided on the outer peripheral surface of the other member, the inclined outer surface 13 may be provided on the leading end surface and the escape portions 62, 62 may be provided between the projections 61, 61.

(2) As the lock spring 34, a coned disc spring may be used, instead of a compression coil spring-like substance. The coned disc spring may be used in a single piece or in a plurality of springs which are to be laminated.

(3) Instead of supplying pressurized oil to the hydraulic chamber 35, for example, compressed air is used to drive the piston 22, by which the sleeve member 15 is moved for releasing. Further, instead of a spring-used lock movement method, a fluid pressure-used lock movement method may be employed. Namely, the present embodiment may be constructed in such a way that the lock spring 34 is omitted, a space at which the lock spring 34 is arranged is used as a lock chamber, a pressurized fluid (such as pressurized oil and compressed air) is supplied to the lock chamber, by which the sleeve member 15 is moved for locking.

(4) As a method for inserting the plug means 6 into the positioning hole 5, instead of lowering the work pallet 2, the base plate 1 may be raised. Further, the present embodiment may be constructed in such a way that the plug member 12 and the positioning hole 5 are arranged so that their axial lines are kept lateral and the plug means 6 is inserted into the positioning hole 5 horizontally. As a matter of course, it may be inserted thereinto in an oblique direction.

Fig. 8 through Fig. 11 illustrate respectively a second embodiment through a fifth embodiment. In these other embodiments, the members which are the same or similar to those used in the first embodiment are in principle given the same reference numerals.

### [Second embodiment]

Fig. 8 is a view similar to Fig. 3, illustrating the second embodiment of the positioning apparatus.

In the second embodiment, as illustrated in Fig. 8, instead of providing the projections 61, 61 and the escape portions 62, 62 on the outer peripheral surface of the plug member 12, they are provided on the inner peripheral surface of the sleeve member 15. In this case, the projections 61, 61 are provided on the inner peripheral surface of the sleeve member 15 so as to be opposed to each other, and the inclined inner surface 17 is formed on the leading end surface (inner surface). In the present embodiment, the inclined inner surface 17 is formed in an arc shape in a plan view. Further, between the projections 61, 61 are provided the escape portions 62, 62. The inclined outer surface 13 is formed in a conical shape over an entire outer periphery of the plug member 12. Other constructions and operations are similar to those described in the first embodiment.

The inclined inner surface 17 may be provided on an inner periphery of some other member arranged on the inner periphery of the sleeve member 15, instead of providing it on the inner periphery of the sleeve member 15. More specifically, a pair of these projections 61, 61 may be provided on the inner peripheral surface of the other member, the inclined inner surface 17 may be provided on the leading end surface and the escape portions 62, 62 may be provided between the projections 61, 61.

### [Third embodiment]

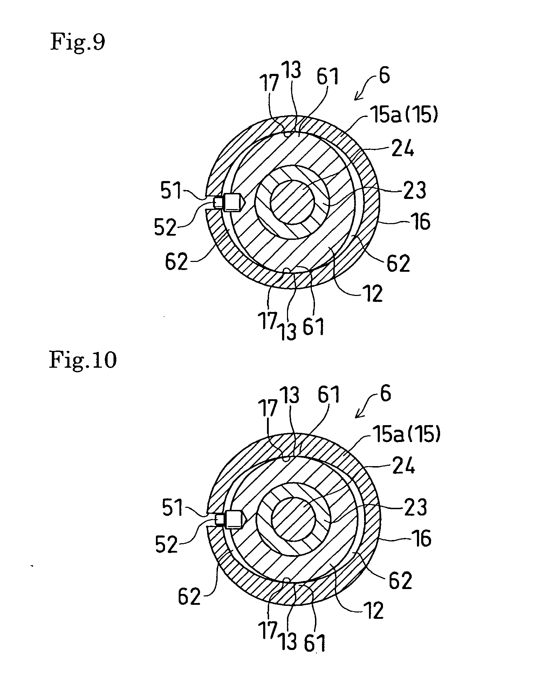

Fig. 9 is a view similar to Fig. 3, illustrating the third embodiment.
In this case, the plug member 12 is formed in an oval shape in a plan view. Thereby, a pair of the projections 61, 61 are provided so as to be opposed to each other on the outer peripheral surface of the plug member 12 and escape portions 62, 62 are also formed between the projections 61, 61. On the outer periphery of the projection 61 is formed the inclined outer surface 13 in an arc shape or in an oval shape in a plan view. Further, on the inner periphery of the sleeve member 15 is formed the inclined inner surface 17 in an arc shape in a plan view.

### [Fourth embodiment]

Fig. 10 is a view similar to Fig. 8, illustrating the fourth embodiment.
In this case, the inner peripheral surface of the sleeve member 15 is formed in an oval shape in a plan view. Thereby, a pair of the projections 61, 61 are provided the inner peripheral surface of the sleeve member 15 so as to be opposed to each other and the escape portions 62, 62 are also formed between the projections 61, 61. On an inner periphery of the projection 61 is formed the inclined inner surface 17 in an arc shape or in an overall shape in a plan view. Further, on an outer periphery of the plug member 12 is formed the inclined outer surface 13 in an arc shape in a plan view.

In the above-described embodiments, the inclined outer surface 13 and the inclined inner surface 17 may be formed linearly in a plan view, instead of being formed in an arc shape or in an oval shape in a plan view.

The projections 61, 61 and the escape portions 62, 62 may be provided on both the inner periphery of the sleeve member 15 and on the outer periphery of the plug member 12, in addition to a case where they are provided only on the inner periphery of the sleeve member 15 (refer to Fig. 8 or Fig. 10) or where they are provided only on the outer periphery of the plug member 12 (refer to Fig. 3 or Fig. 9).

### [Fifth embodiment]

Fig. 11 is a view similar to Fig. 4, illustrating the positioning apparatus of the fifth embodiment.
As illustrated in Fig. 11, the lower part of the housing 9 is screwed into the installation hole 8 of the base plate 1.

Into the screw hole 63 opened in the upper end surface of the plug member 12 is fitted a lower part of a flanged bolt 64. On a head of the flanged bolt 64 is opened a hexagonal hole (not illustrated). As illustrated by the chain lines, a hexagon wrench 65 is allowed to be engaged with the hole. Between the head of the flanged bolt 64 and the flange portion is supported the cap member 25 relatively rotatably and vertically unmovably. The cover member 53 is formed integrally with the cap member 25. The cover member 53 is formed annularly in a circumferentially seamless manner, covering the outside of the slit 51 of the sleeve member 15. Into a engaging recess 54 formed at a lower part of the cap member 25 is fitted the upper flange 27 of the sleeve member 15.

In the present embodiment, the flanged bolt 64 corresponds to the drive member 21. Further, the drive means D is constructed with the screw hole 63 and the hexagon wrench 65.

In the above-described construction, when the hexagon wrench 65 is inserted into the head of the flanged bolt 64 to turn the head, the flanged bolt 64 is screwed into a vertical direction. Thereby, the sleeve member 15 moves downward or upward, and the sleeve member 15 expands or contracts in a radial direction due to a tapering engagement with the inclined outer surface 13. Other constructions and operations are similar to those described in the first embodiment.

In the present embodiment, since the cover member 53 is formed integrally with the cap member 25, it is possible to reduce the number of components and also decrease the manufacturing processes and the cost.

The above-described first embodiment through the fifth embodiment may be changed as illustrated in the following (A) to (C).

(A) The plug member 12 and the housing 9 may be formed separately, instead of being formed integrally. In this case, the plug member 12 may be firmly fixed to the housing 9 by using bolts or screws.
Further, the housing 9 and the base plate 1 may be formed integrally, instead of being formed separately.

(B) The support surface 1a may be provided on the base plate 1, instead of being provided on the upper surface of the flange 9a of the housing 9. In this case, it is preferable that the support surface 1a is provided on an upper surface of a boss projected from the base plate 1, which is located to correspond to a clamping means (not illustrated).

(C) The positioning apparatus of the present invention may be provided with a seating confirmation means. For example, on the support surface 1 a of the base plate 1 is opened a detection nozzle hole (not illustrated) and compressed air for detection is supplied to the detection nozzle hole. Then, when the supported surface 2a of the work pallet 2 comes into contact with the support surface 1a, the pressure inside the detection nozzle hole is increased. By detecting the pressure rise with a pressure switch and the like, it is possible to confirm whether the work pallet 2 is seated on the base plate 1.

### [Clamping system]

Hereinafter, an explanation will be made for an application example of the positioning apparatus to a clamping system.
Fig. 12 is a schematic plan view illustrating the clamping system of the present invention.

As illustrated in Fig. 12, on an upper surface of a table T of a machining center is securely installed the base plate 1. The work pallet 2 is fixed to the base plate 1 via the clamping system of the present invention in an attachable and detachable manner. The clamping system is provided with a first positioning apparatus 101 and a second positioning apparatus 102.

The work pallet 2 is provided in a plurality (only one work pallet is illustrated here) and exchanged whenever necessary. It is positioned and fixed to the base plate 1 with the two positioning apparatuses 101, 102.

The first positioning apparatus 101 is provided with a sleeve member 15 which is inserted into the inner peripheral surface of the positioning hole 5 formed in the work pallet 2, allowing a diametrically expanding force to act over substantially whole periphery of the sleeve member 15 and coming into close contact with the inner peripheral surface of the positioning hole 5, by which the work pallet 2 is horizontally positioned in relation to the base plate 1 via the sleeve member 15. More specifically, positioning is made so that the axis of the positioning hole 5 is aligned with an axis A of the first positioning apparatus 101. It follows that the sleeve member 15 which is in close contact is driven downward to fix the work pallet 2 to the base plate 1.

It is noted that the first positioning apparatus 101 may be available in various specific constructions, and, for example, in the positioning apparatus 101 of the first embodiment, the projections 61, 61 or the escape portions 62, 62 are not provided but a tapered inclined outer surface 13 may be formed over the whole outer periphery of the plug member 12.

Further, the positioning apparatus of the first embodiment (refer to Fig. 2 and Fig. 3) is used as the second positioning apparatus 102. The projections 61, 61 are projected in two directions substantially perpendicular to a straight line L for connecting the axis A of the positioning apparatus 101 and an axis B of the positioning apparatus 102. Therefore, a diametrically expanding force acts on the sleeve member 15 in the projecting directions of the projections 61, 61, by which rotation of the work pallet 2 around the axis A is blocked. Further, at this moment, radial misalignment with the axis A is absorbed by the existence of the escape portions 62, 62. It follows that the sleeve member 15 which is in close contact is driven downward to fix the work pallet 2 to the base plate 1.

Since the positioning apparatus of the first embodiment is employed as the second positioning apparatus 102 in the present clamping system, it is possible to conduct positioning with high accuracy. Further, when the work pallet 2 and the base plate 1 are attached or detached, the fitting gap G (illustrated in Fig. 4 and Fig. 5) is formed between the inner peripheral surface of the positioning hole 5 and the straight outer surface 16 in the second positioning apparatus 102. Therefore, the workability will be improved upon such attachment or detachment. In addition, since in the second positioning apparatus 102, the work pallet 2 can be brought adjacent to the base plate 1 via the sleeve member 15 during the lock movement, an exclusive clamping means can be omitted whenever necessary.

Furthermore, as explained in the present clamping system, it is possible to provide a clamping system with positioning allowed to be made in various modes by employing the positioning apparatus of the first embodiment at least as one of these positioning apparatuses 101, 102.

The clamping system may be changed as explained in the following (1) to (4).

(1) The present invention is not limited to a construction in which the positioning apparatus of the first embodiment is employed as the second positioning apparatus 102, but, for example, the positioning apparatus described in the second embodiment or the third embodiment may be employed.

(2) In addition to the above two positioning apparatuses 101, 102, a clamping means capable of pressing the supported surface 2a of the work pallet 2 against the support surface 1 a of the base plate 1 may be provided in particular.

(3) The positioning apparatus 102 described respectively in the first embodiment through the third embodiment is not limited to a construction in which the first positioning apparatus 101 is employed in combination. For example, a clamping system may be constructed by combining a, plurality of sets of only the positioning apparatuses of the first embodiment (refer to Fig. 2 and Fig. 3). In this case, it is preferable that the projections 61, 61 are projected in a different direction, depending on the respective positioning apparatuses.

(4) The combination of the first block and the second block may be a combination of a table of a machine tool and a work pallet, a combination of a work pallet and a jig base, a combination of a jig base and a work piece, or a combination of a working jig such as a welding jig and a working article such as a work piece, instead of the combination of the base plate 1 and the work pallet 2 exemplified as an example. Further, the combination may be a set of a board of an injection molding machine or of a pressing machine and a mold. In addition, the present invention is applicable to positioning of a work piece, a tool and the like used in various processing machines such as laser processing machines and electric discharge processing machines.

## Claims

1. A positioning apparatus comprising:
a plug member (12) projected from a first block (1) toward a leading end so as to be inserted into a positioning hole (5) formed in a second block (2);
an inclined outer surface (13) provided on the plug member (12) so as to get closer to an axis toward the leading end;
an annular sleeve member (15) arranged outside the inclined outer surface (13) and formed in such a way that at least a part in a circumferential direction is allowed to deform in both a diametrically expanding direction and a diametrically contracting direction;
a straight outer surface (16) provided on the sleeve member (15) and allowed to come into close contact with an inner peripheral surface of the positioning hole (5);
an inclined inner surface (17) provided on the sleeve member (15) and facing the inclined outer surface (13);
a drive member (21) inserted into the plug member (12) axially movably and connected to the sleeve member (15),
at least one of the inclined inner surface (17) and the inclined outer surface (13) is provided on a pair of projections (61, 61) opposed to each other in the diametrically expanding and diametrically contracting direction,
escape portions (62, 62) are formed between the projections (61, 61),
the sleeve member (15) is allowed to axially reciprocate by a drive means (D) via the drive member (21).

2. The positioning apparatus as set forth in claim 1, wherein
a slit (51) axially extending is formed in a peripheral wall (15a) of the sleeve member (15),
a cover member (53) covering at least a part of the slit (51) is arranged outside the sleeve member (15).

3. The positioning apparatus as set forth in claim 2, wherein
the cover member (53) is formed annularly in a circumferentially seamless manner.

4. The positioning apparatus as set forth in claim 2, wherein
the cover member (53) is integrally formed with a cap member (25) arranged from the plug member (12) to the leading end side.

5. A clamping system which is provided with the positioning apparatus as set forth in any one of claim 1 to claim 4.

6. A clamping system provided with a plurality of positioning apparatuses, in which at least one of these positioning apparatuses is the positioning apparatus as set forth in any one of claims 1 to claim 4.
